# EUROPEAN PATENT APPLICATION

(11) **EP 3 852 083 A1**
(43) Date of publication of application: **21.07.2021**
(21) Application number: 20151697.8
(22) Date of filing: 14.01.2020
(51) Int. Cl.: G08G 1/16

(54) **SYSTEM AND METHOD FOR OBSTACLE DETECTION AND AVOIDANCE ON ROADS**

(71) Applicant: Veoneer Sweden AB, 447 37 Vårgårda (SE)
(72) Inventor: PADURARIU, Catalin, 700051 Iasi (RO)
(74) Representative: Reichert & Lindner Partnerschaft Patentanwälte

(57) **Abstract**

The invention relates to a system (1) and a method for a vehicle (3) for obstacle (6) detection and avoidance on roads or highways (4). The inventive system (1) comprises a camera system (5) with at least one forward-looking camera and/or side looking camera, at least one LiDAR-device (7) and a communication device (9) for communication between vehicles (3). A data evaluation device (10) is communicatively connected to the camera system (5), the LiDAR-device (7) and the communication device (9). An actuation device (12) receives information from the data evaluation device (10) for carrying out actions, so that the vehicle (3) avoids the obstacle (6).

## Description

### FIELD OF THE INVENTION

The invention relates to a system for obstacle detection and avoidance on roads. Especially the inventive system comprises a camera system with at least one forward-looking camera and/or side looking camera, at least one lidar device and a communication device for communication between vehicles.

Furthermore, the invention relates to a method for obstacle detection and avoidance for vehicles on roads or highways.

### DESCRIPTION OF THE BACKGROUND ART

International patent application WO 2019/078866A1 is directed to a vehicle comprising controller(s) and device(s), which are configured to detect and predict locations and movements of roadway obstacles, infrastructure features and elements that include, for example, intersections and crosswalks, and positions, movement, and trajectories of pedestrians and other vehicles. The controller(s) and device(s) are also coupled to and/or configured as trajectory and intersection signal detectors, which detect the roadway obstacles and features such as the pedestrians, other vehicles, intersections, and crosswalks, as well as signals for the roadways and crosswalks. The vehicle controller(s) and device(s) generate and communicate signaling changes to the intersection and crosswalk infrastructure controllers, and message alerts that are communicated to the other vehicles.

US patent application US 2019/385457 A1 discloses an obstacle warning method for a vehicle. The method includes detecting a first obstacle through a laser sensor, identifying a location of an adjacent vehicle, determining a blind spot of the adjacent vehicle due to the first obstacle based on the location of the adjacent vehicle, detecting a second obstacle involved in the blind spot through the laser sensor, and transmitting a danger message to the adjacent vehicle. A vehicle to which the method is applied may be connected to any artificial intelligence (Al) module, a drone, an unmanned aerial vehicle, a robot, an augmented reality (AR) module, a virtual reality (VR) module or a 5th generation (5G) mobile communication device.

Modern vehicles today have advanced driver-assistance systems integrated to their electronics and manufacturers refresh their car models to add more of these features into their cars. Early advanced driver-assistance systems include electronic stability control, anti-lock brakes, lane departure warning, adaptive cruise control and traction control. These systems can be affected by mechanical alignment adjustments. This has led many manufacturers to require electronic resets for these systems, after a mechanical alignment is performed.

An Advanced Driver Assistance System (ADAS) relies on inputs from multiple data sources, including automotive imaging, LiDAR, radar, image processing, computer vision, and in-car networking. Additional inputs are possible from other sources separate from the primary vehicle platform, such as other vehicles, referred to as Vehicle-to-vehicle (V2V), or Vehicle-to-Infrastructure (V2X), such as mobile telephony or WiFi data network systems.

LiDAR it the eyes of autonomous vehicles. It provides them a 360-degree view of the surrounding of a vehicle. The 3D representation is created by measuring the speed of light and the distance covered by it which helps to determine the vehicle's position with other surrounding objects.

Driving the vehicle on a highway or a national road it might happen that another vehicle is stationary or an obstacle is blocking the road. Braking in time is inevitable when suddenly a vehicle is stationary on the first lane of the road, in order to avoid the collision. Consequently, many accidents happen in these surprising situations. Surprising situations can happen after a curve of the road, a lane on a highway or a summit of the road.

### SUMMARY OF THE INVENTION

It is an object of the present invention to provide a system for a vehicle for obstacle detection on roads or highways and helps other vehicles to avoid a collision with the obstacle.

The above object is achieved by a system for a vehicle for obstacle detection and avoidance which comprises the features of claim 1.

It is a further object of the invention to provide a method for a vehicle for obstacle detection on roads or highways and helps other vehicles to avoid a collision with the obstacle.

The above object is achieved by a method for a vehicle for obstacle detection and avoidance which comprises the features of claim 7.

According to an embodiment of the invention, a system for a vehicle for obstacle detection and avoidance on roads or highways comprises a camera system with at least one forward-looking camera and/or side looking camera, at least one LiDAR-device. Additionally a communication device is provided for communication between vehicles having the inventive system implemented. The inventive system comprises as well a data evaluation device which is communicatively connected to the camera system, the LiDAR-device and the communication device. An actuation device is connected to the data evaluation device for carrying out actions, so that the vehicle avoids the obstacle.

The advantage of the system of the present invention is that an obstacle (stationary cars, accidents, or the like) can be avoided by braking in time whilst traveling on a highway or a national road.

The data evaluation device of the inventive system can be separate or integrated within an ADAS-system of the vehicle. The inventive system may be a totally new separated one, and the system may permit a partial or total autonomous braking of the vehicle in time in order to avoid the collision.

The camera system is defined by at least one forward-looking camera and an internal camera system of the vehicle-The at least one forward-looking camera of the vehicle and/or the cameras of the internal camera system are used to identify the obstacle. The actuation device carries out at least the partial autonomous or total autonomous braking in time to slow down the vehicle and avoid the collision with the obstacle. The actuation device alerts a driver of the vehicle prior to the partial autonomous or total autonomous braking with a visual signal, a vibration signal or an audio signal.

The communication device of the inventive system of each vehicle can include a radar device and a wireless communication device, both of which are combined, for joining a multitude of vehicles to exchange information in order to avoid a collision with an obstacle.

The inventive method for obstacle detection and avoidance for vehicles on roads or highways comprising the steps of:
- checking the environment of a road or a highway with a camera system, having at least one forward-looking camera, and or a side looking camera or a LiDAR-device, of at least one vehicle traveling in one direction on the road or highway;
- evaluating data received by the camera system and/or the LiDAR-device with a data evaluation device of the vehicle;
- communicating a message to at least one vehicle traveling in an opposite direction on the road or highway in case an obstacle is detected on the road or highway on the opposite direction and prior to an approach of the obstacle of the vehicle, traveling in the opposite direction; and
- actuating a brake of at least one vehicle traveling in an opposite direction to slow down the vehicle approaching the obstacle.

The advantage of the inventive method is that obstacles can be avoided and vehicles can be slowed down timely prior to the visual contact with an obstacle on the road or highway.

Actuating of the brake of the vehicle is carried out in an at least partial autonomous or total autonomous braking manner by an actuation device. According to the invention, the actuation device alerts a driver of the vehicle traveling in the opposite direction with a visual signal, a vibration signal or an audio signal, prior to partial autonomous or total autonomous braking.

The evaluating of the data, collected by the camera system and/or the LiDAR-device of the vehicle, is carried out by a evaluation device. The data evaluation device is separate or integrated within an ADAS-system of the vehicle.

Communicating is carried out with a communication device of each vehicle. The communication device including a radar device and a wireless communication device, both of which are combined, for joining a multitude of vehicles for obstacle avoidance.

In everyday situations there are multiple instances when a driver is driving the vehicle on the highway or national road and a stationary vehicle (obstacle) is waiting for solving an issue. The stationary vehicle blocks the road. Timely braking, when suddenly a vehicle is stationary on the lane of a road one is travelling is almost impossible and the collision is inevitable. Many accidents happened in these situations.

With the inventive system LDOD (Long Distance Obstacle Detection) system and the inventive method, integrated within the ADAS-system (ADAS control unit), may permit a partial or total autonomous braking in time. So that the vehicle can avoid the collision. The inventive system can be totally separated as well.

There are several scenarios on which the inventive system (LDOD-system) or method can contribute to the travel safety. Is should be noted that it is not limited to examples listed below.

A dangerous situation can be avoided when a vehicle is stopped on the emergency lane of a highway or on a first lane of a European or national road, for solving an issue. In case all vehicles have the inventive method or system (LDOD-system) implemented, the communication between vehicles can be immediately and the collision can be avoided also.

Another dangerous situation can be when the vehicle is approaching a dangerous curve and the vehicle or the driver cannot anticipate what is coming after the curve. A stationary vehicle for example, but not limited to, can block the road. The inventive systems (LDOD-systems) of the vehicles communicate with each other to report the dangerous situation they are going to approach.

The dangerous situation can be also when the driver is climbing a ramp road with the vehicle and as soon as the vehicle finishes to climb the road, a stationary vehicle appears on one lane of the road. The inventive system (LDOD system) and the inventive method receiving the alert information from other vehicles to that the receiving car can take actions autonomously by braking in time the vehicle in order to avoid the collision. Moreover the system can alert the driver by a visual signal, a vibrational signal or an audio signal in order to brake and slow down the vehicle.

### BRIEF DESCRIPTION OF THE DRAWINGS

The numerous advantages of the disclosure may be better understood by those skilled in the art by reference to the accompanying figures in which:
- **Figure 1**: is a schematic representation of the inventive system.
- **Figure 2**: is an embodiment of the inventive system implemented in a vehicle.
- **Figure 3**: is a further embodiment of the inventive system implemented in a vehicle.
- **Figure 4**: is a schematic representation of a dangerous situation on a regular road which can be avoided with the inventive system or method.
- **Figure 5**: is a schematic representation of a dangerous situation on a highway which can be avoided with the inventive system or method.
- **Figure 6**: is a flowchart representing the inventive method.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

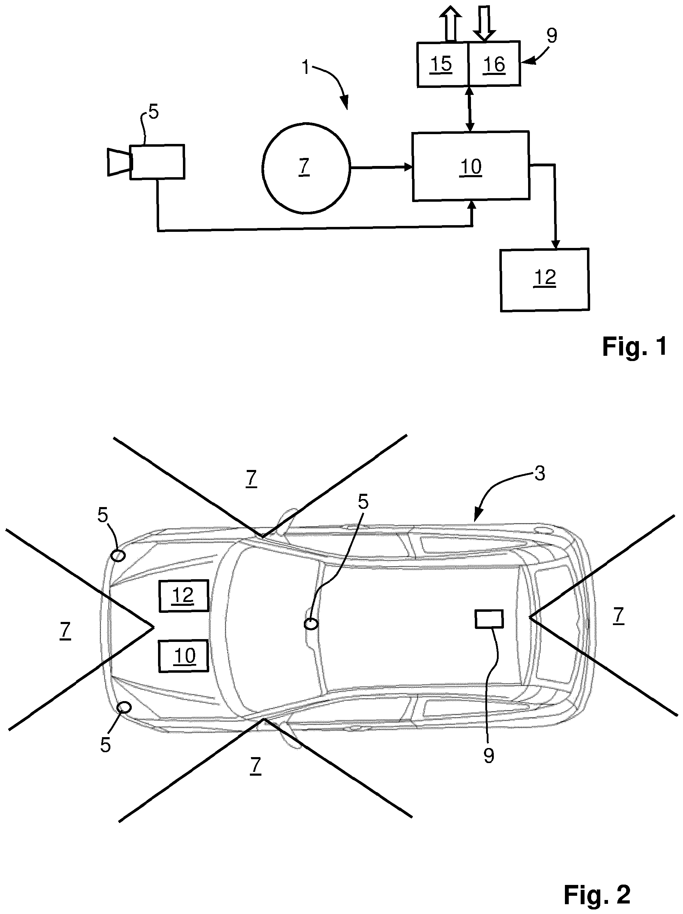

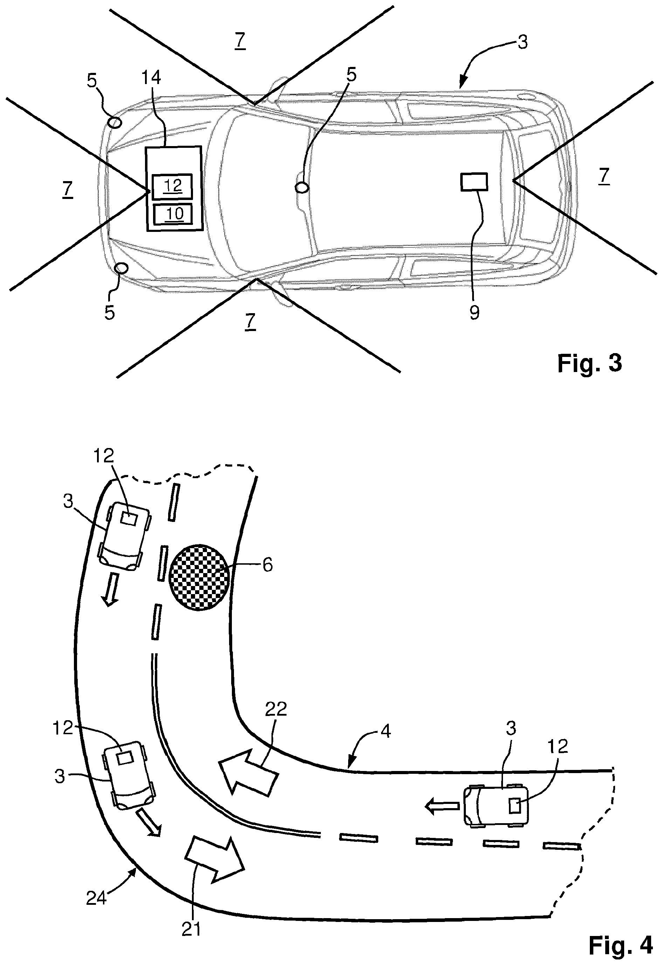

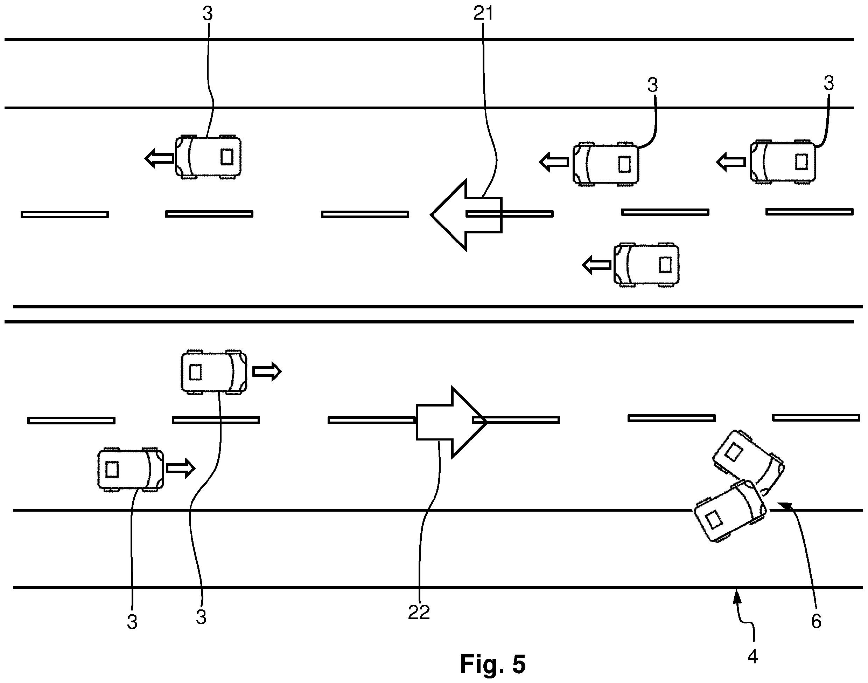

**Figure 1** shows a schematic representation of the inventive system 1, which can be implemented in a vehicle 3. For checking the environment and thereby collecting data about obstacles a road or highway 4, the inventive system 1 uses at least one at least one forward-looking camera 5 and at least one LiDAR-device 7. The at least one forward-looking camera 5 and at least one LiDAR-device 7 deliver the detected data to a data evaluation device 10. The data evaluation device 10 is communicatively connected to a communication device 9, which is configured to be in communication with vehicles 3 being close to or approaching nearby alert situation (obstacles or the like). The communication device 9 of each vehicle 3 includes a radar device 15 and a wireless communication device 16, both of which are combined, for joining a multitude of vehicles 3. The data evaluation device 10 is as well communicatively connected with an actuation device 12. The actuation device 12 is configured for example to at least partial autonomous or total autonomous operating a brake in time to slow down the vehicle 3, which was notified by the traveling in one direction 21 (see fig. 4 or 5) on order to slow down the vehicle 2 traveling in an opposite direction 22 (see fig. 4 or 5). The at least partial or total autonomous braking in time, supports the vehicle 3 to avoid a possible collision with the obstacle 6. The system 1, called Long Distance Obstacle Detection - system (LDOD-system) can alert the driver by a visual signal, a vibration or an audio signal that braking and slowing down of the vehicle 3 will take place.

**Figure 2** shows an embodiment of the inventive system 1 (LDOD-system) implemented in a vehicle 3. In the embodiment shown here the inventive system 1 comprises a plurality of forward-looking camera 5 and a LiDAR-device 7. The LiDAR-device 7 provide a 360°C view around the vehicle 3. In case the data evaluation device 10 determine from the data delivered by the forward-looking cameras 5 and the LiDAR-device 7 an obstacle 6, the communication device 9 communicates at least one vehicle 3, approaching the obstacle 6. The communication between vehicles 3 notifies about a nearby alert situation obstacle 6. The actuation device 12 of the other vehicle 3 initiates braking in order to avoid a possible collision. In the embodiment of the inventive system 1, shown here, the data evaluation device 10a implemented as a separate system.

**Figure 3** shows is a further embodiment of the inventive system 1 implemented in a vehicle 3. In the embodiment shown here the data evaluation device 10 and the actuation device 12 are integrated within an ADAS-system 14.

**Figure 4** shows is a schematic representation of a dangerous situation on a regular road 4 which can be avoided with the inventive system 1 or method. Vehicles 3 travelling along the direction 21 of the road 4 detect with the inventive system 1 the dangerous situation or obstacle 6. The at least one vehicle 3 travelling along the direction 21 get via the communication device 9 in contact with a vehicle 3 travelling along the opposite direction 22 of road 4. The traffic situation shown here is, that the dangerous situation or obstacle 6 (stopped vehicle, accident or the like) is behind a curve 24- The driver of the vehicle 3 or the vehicle 3 itself (traveling in the opposite direction 22) cannot anticipate what is coming after the curve 24. With the communication device 9 of the vehicle 3 traveling in direction 21 gets into contact with the at least one vehicle 3 traveling in the opposite direction 22. The inventive system 1 (LDOD-system) implemented in both vehicle 3 carries out at least a slow down on the vehicle traveling along the opposite direction 22 and approaching the obstacle 6.

**Figure 5** shows is a schematic representation of a dangerous situation on a highway 5 which can be avoided with the inventive system 1 or method. The dangerous situation or obstacle 6 shown here is an accident between two vehicles which block the emergency lane and the first lane of the highway 5. At least one of the vehicles travelling in the direction 21 on the highway 4 can sense the dangerous situation or the obstacle 6 on the opposite lane of the highway 4 with the inventive system 1 (LDOD-system). The vehicle 3, travelling in direction 21, has the inventive system 1 (LDOD-system) implemented and is detecting the obstacle 6 on the opposite direction 22 with a forward and/or side looking camera 5 or a lidar system 7. It has to be noted that the inventive system 1 is not limited to forward looking cameras 4, side looking cameras 4 or a LiDAR-device 7. The information detected by the vehicle 3 traveling along direction 21 is transmitted to the vehicle 3 traveling along the opposite direction 22 an approaching the obstacle 6. Receiving the alert information, the inventive system 1 (LDOD-system) can take actions autonomously, for example braking in time, in order to avoid the collision, or can alert the driver by a visual signal, a vibration signal or audio signal in order to brake and slow down the vehicle 3. Partial or total autonomous braking in time of the vehicle traveling along the opposite direction 22 helps to avoid a possible collision.

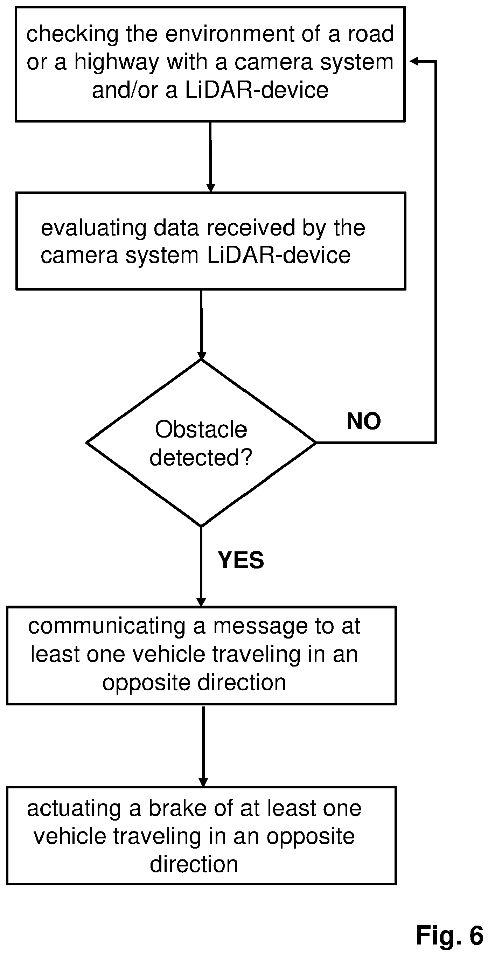

**Figure 6** shows is a flowchart representing the inventive method for obstacle 6 detection and avoidance on roads or highways 4. At least one vehicle 3 travelling along the direction 21 of the road 4 is equipped with the inventive system 1, which can detect obstacles on the opposite direction 22 of the road or highway 4. The inventive system 1 (LDOD-system), which is implemented in the vehicle, detects with a camera system 5 and/or a LiDAR-device 7 the obstacle 6 on the road or highway 4. The data detected by the camera system 5 and/or the lidar device 7 are forwarded to a data evaluation device 10.

In case an obstacle 6 is detected, the detecting vehicle 3 establishes a communication with a vehicle 3 traveling along the opposite direction 22 of the road or highway 4. The vehicle 3 traveling along the opposite direction 22 comprises as well the inventive system 1. The vehicle traveling along the opposite direction and approached the obstacle 6 is receives the information via the communication device 9 form the other vehicle 3. Based on the received information the actuation device 12 of the vehicle 3 traveling along the opposite direction 22 can carry out actions in order to avoid the obstacle 6. A possible action would be that the actuation device 12 initiates an at least partial autonomous or total autonomous braking in order to slow down the vehicle 3 traveling along the opposite direction 22 and approaching the obstacle.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: system
- 3: vehicle
- 4: road, highway
- 5: forward-looking camera
- 6: obstacle
- 7: LiDAR-device
- 9: communication device
- 10: data evaluation device
- 12: actuation device
- 14: ADAS-System
- 15: radar device
- 16: wireless communication device
- 21: direction
- 22: opposite direction
- 24: curve

## Claims

1. A system (1) for a vehicle (3) for obstacle (6) detection and avoidance on roads or highways (4) comprising a camera system (5) with at least one forward-looking camera and/or side looking camera, at least one LiDAR-device (7) and a communication device (9) for communication between vehicles (3), **characterized by**
a data evaluation device (10) communicatively connected to the camera system (5), the LiDAR-device (7) and the communication device (9) and an actuation device (12) to the data evaluation device (10) for carrying out actions so that the vehicle (3) avoids the obstacle (6).

2. The system (1) as claimed in claim 1, wherein the data evaluation device (10) is separate or integrated within an ADAS-system (14) of the vehicle (3).

3. The system (1) as claimed in any of the preceding claims, wherein the camera (5) system is defined by at least one forward-looking camera (5) and an internal camera system of the vehicle (3), wherein the at least one forward-looking camera of the vehicle (3) and/or the cameras of the internal camera system are used to identify the obstacle (6).

4. The system (1) as claimed in any of the preceding claims, wherein the actuation device (12) carries out at least partial autonomous or total autonomous braking in time to slow down the vehicle (3).

5. The system (1) as claimed in claim 4, wherein the actuation device (12) alerts a driver of the vehicle (3) prior to partial autonomous or total autonomous braking with a visual signal, a vibration signal or an audio signal.

6. The system (1) as claimed in any of the preceding claims, wherein communication device (9) of each vehicle (3) includes a radar device (15) and a wireless communication device (16), both of which are combined, for joining a multitude of vehicles (3).

7. Method for obstacle (6) detection and avoidance for vehicles (3) on roads or highways (4) comprising the steps of:
• checking the environment of a road or a highway (4) with a camera system (5), having at least one forward-looking camera and/or side looking camera and/or a LiDAR-device (7), of at least one vehicle (3) traveling in one direction (21) on the road or highway (4);
• evaluating data received by the camera system (5) and/or the LiDAR-device (7) with a data evaluation device (10) of the vehicle (3);
• communicating a message to at least one vehicle (3) traveling in an opposite direction (22) on the road or highway (4) in case an obstacle (6) is detected on the road or highway (4) on the opposite direction (22) and prior to an approach of the vehicle (3), traveling in the opposite direction (22); and
• actuating a brake of at least one vehicle (3) traveling in an opposite direction (22) to slow down the vehicle (3) approaching the obstacle (6).

8. The method as claimed in claim 7, wherein the actuating of the brake of the vehicle is carried out in an at least partial autonomous or total autonomous braking manner by an actuation device (12).

9. The method as claimed in claim 8, wherein the actuation device (12) alerts a driver of the vehicle (3) traveling in the opposite direction (22) with a visual signal, a vibration signal or an audio signal, prior to partial autonomous or total autonomous braking.

10. The method as claimed in claim 7, wherein the evaluating of the data, collected by the camera system (5) and/or the LiDAR-device (7) of the vehicle (3), is carried out by a evaluation device (10).

11. The method as claimed in claim 10, wherein the data evaluation device (10) is separate or integrated within an ADAS-system (14) of the vehicle (3).

12. The method as claimed in claim 7, wherein the communicating is carried out with a communication device (9) of each vehicle (3) including a radar device (15) and a wireless communication device (16), both of which are combined, for joining a multitude of vehicles (3).
